## Europäisches Patentamt
## European Patent Office
## Office européen des brevets

(11) Veröffentlichungsnummer: **0 048 457**
**A2**

# EUROPÄISCHE PATENTANMELDUNG

(21) Anmeldenummer: **81107375.8**

(22) Anmeldetag: **17.09.81**

(51) Int. Cl.³: **B 23 Q 3/155**

(30) Priorität: **18.09.80 DE 3035215**

(43) Veröffentlichungstag der Anmeldung:
**31.03.82 Patentblatt 82/13**

(84) Benannte Vertragsstaaten:
**CH FR GB IT LI**

(71) Anmelder: **Dieter Hansen GmbH**
**Jahnstrasse 9 & 11**
**D-6116 Eppertshausen(DE)**

(72) Erfinder: **Zimmer, Alfred**
**Hochstrasse 10**
**D-6101 Brensbach(DE)**

(74) Vertreter: **Zinngrebe, Horst, Dr.rer.nat. et al,**
**Patentanwälte Dipl.-Ing. G. Schliebs Dr.rer.nat. Horst**
**Zinngrebe Claudiusweg 17 A**
**D-6100 Darmstadt(DE)**

(54) Werkzeugwechseleinrichtung für eine Werkzeugmaschine.

(57) Beschrieben ist eine Werkzeugwechseleinrichtung für eine Werkzeugmaschine mit in seiner Achsrichtung verfahrbarem Spindelkopf und einem parallel zum Spindelkopf und unter die Spindel verfahrbaren Magazin mit mehreren Magazinplätzen für Werkzeuge. Damit für den Werkzeugwechsel und die Werkzeugübergabe nur eine Antriebsvorrichtung und einfache translatorische und Rotationsbewegung benötigt wird, ist vorgesehen, daß parallel zum Spindelkopf ein Support verfahrbar ist, mit dem ein dreh- und schwenkbares Trommelmagazin mit mehreren, zum Umfang offenen Magazinplätzen für Werkzeuge gekuppelt ist, das in einer Schienenführung geführt ist, derart, daß es mit seiner Trommelachse in Wechselposition parallel und in Ruheposition senkrecht zur Spindelachse hängt, daß die Werkzeuge in den Magazinplätzen gegen seitliches Herausfallen gesichert sind, daß die Spindel mit einem Magnetspannfutter zum Greifen und Halten eines Werkzeuges ausgerüstet ist und daß sich die Spindel bzw. der Spindekopf beim Werkzeugwechsel relativ zum Magazin bewegt.

Fig. 1

- 1 -

Die Erfindung betrifft eine Werkzeugwechseleinrichtung
für eine Werkzeugmaschine mit in seiner Achsrichtung verfahrbarem Spindelkopf nach dem Oberbegriff des Hauptanspruchs.

Werkzeugwechseleinrichtungen dieser Art dienen dem
automatischen Werkzeugwechsel im Verlauf planmäßiger
Bearbeitungsvorgänge, vorzugsweise bei der spanabhebenden Bearbeitung von Werkstücken durch Fräsen, Bohren,
Funkenerodieren u. dgl. Die Wechselzeiten und -vorgänge
werden z. B. mittels Lochstreifen oder Magnetband gesteuert. Da die Maschinen ihr Programm unbeaufsichtigt erledigen, Funkenerosionsmaschinen z. B. auch während der
Nacht durchlaufen, werden bezüglich der Einhaltung sehr
enger Lagetoleranzen der Werkzeuge an der Spindel und des
störungsfreien Wechsels sehr hohe Anforderungen an die
Wechseleinrichtung gestellt.

Bekannte Wechseleinrichtungen arbeiten mit Ketten-
(Paternoster-) oder drehenden Trommel-Magazinen und einer
Übergabevorrichtung die zwischen Magazin und Spindel geschaltet ist und der gegenüber dem Magazin mit einem
Magazinplatz mittels einer Antriebsvorrichtung in eine
Werkzeugwechselposition gebracht werden muß, in der von
der Übergabevorrichtung ein Werkzeug entnommen und zum
Spindelfutter gebracht wird oder umgekehrt (DE-OS 2525364
und 2609337). Die Vielzahl der benötigten Bewegungs-,
Kupplungs- oder Greifvorgänge macht den Aufbau solcher
Wechseleinrichtungen kompliziert und störempfindlich, so daß der Wartungsaufwand verhältnismäßig hoch
ist.

- 2 -

Zur Vermeidung solcher und anderer Nachteile aus dem Stand der Technik bekannter Lösungen liegt der Erfindung die Aufgabe zugrunde, eine Werkzeugwechseleinrichtung der gattungsgemäßen Art derart auszubilden, daß für Werkzeugwechsel und -übergabe nur eine Antriebsvorrichtung und einfache translatorische und Rotationsbewegungen benötigt werden.

Diese Aufgabe wird erfindungsgemäß durch die im Kennzeichen des Hauptanspruchs angegebenen Merkmale gelöst.

Die Magazinplätze des in seiner Ruheposition seitlich des Spindelkopfes am Spindelgehäuse hängenden Trommelmagazins sind für den Werkzeugaustausch frei zugänglich. In seiner Wechselposition hängt es seitlich neben der Spindel mit einem Platz positioniert unter dieser, und die Wechselbewegung wird mit dem Spindelvorschub ausgeführt. Der Platzwechsel, d.h. die Weiterschaltung des Trommelmagazins erfolgt im Zuge der Supportbewegung während des Stellungswechsels des Magazins; es sind eine oder mehrere Weiterschaltungen möglich.

Die besondere Vereinfachung liegt in der Verwendung eines Magnetspannfutters. Derartige Magnetspannfutter sind z. B. an Funkenerosionsmaschinen bekannt. Gemäß einer bevorzugten Ausführungsform der Erfindung ist dieses Magnetspannfutter mit einem Dauermagneten zum Ergreifen und Halten des Werkzeuges und mit einem gegengepolten Elektromagneten zum Lösen und Zurücklegen des Werkzeuges ausgerüstet, und der Stromkreis des Elektromagneten ist über Schleifkontakte zum Lager des Trommelmagazins geführt. Mit dieser Ausführung ist das Spannfutter während der Arbeitsphasen stromfrei, es treten keine Erwärmungen im Spannfutter und am Werkzeug auf und es wer-

- 3 -

den keine Schleifringe und -kontakte benötigt wie im Falle eines elektromagnetischen Spannfutters der bekannten Art. Dies ist besonders vorteilhaft bei Funkenerosionsmaschinen mit drehender Pinole. Die Tragkraft moderner Dauermagneten reicht im Rahmen des zur Verfügung stehenden Raumes an der Spindel für normale Werkzeuggewichte völlig aus. Eine drehschlüssige Kupplung mit dem Werkzeugschaft macht keine Schwierigkeiten.

Die Erfindung wird im folgenden an einem Ausführungsbeispiel näher erläutert, das in der Zeichnung dargestellt ist. In dieser zeigen:

Fig. 1 eine Vorderansicht des Maschinenkopfes einer Werkzeugmaschine mit vertikaler Spindel mit einem Schnitt durch die Werkzeugwechseleinrichtung;

Fig. 2 einen Querschnitt durch das Magazin der Wechseleinrichtung in der Ebene II - II in Fig. 1;

Fig. 3 eine andere Seitenansicht des Maschinenkopfes mit Blick gegen den Support der Wechseleinrichtung und dessen Führung;

Fig. 4 Draufsicht auf und Längsschnitt durch ein Dauermagnet-Spannfutter.

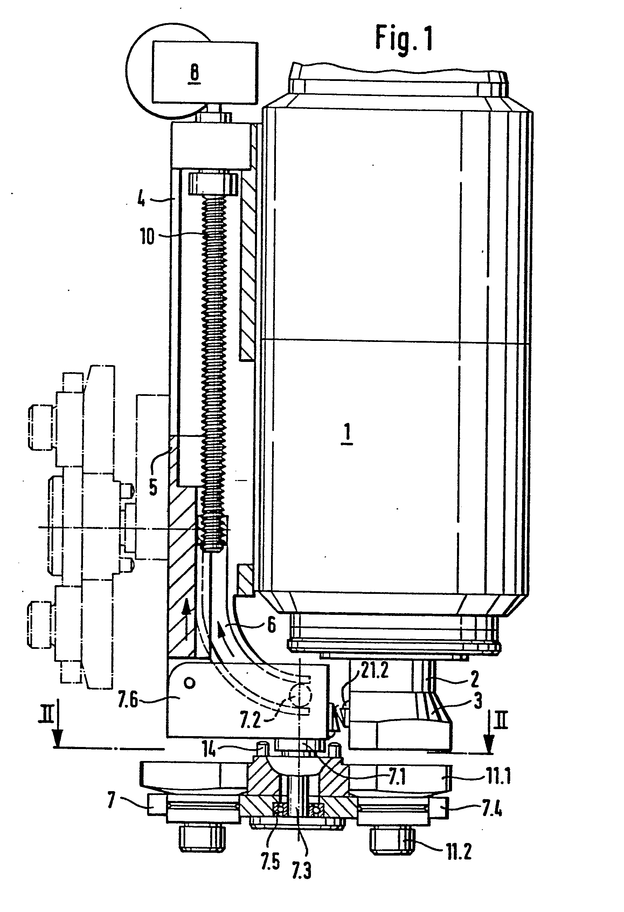

Als Beispiel ist der Pinolenkopf 1 einer Funkenerosionsmaschine dargestellt, aus dem unten die Pinole 2 mit dem Magnetspannfutter 3 heraustritt. Fig. 1 ist eine Darstellung aus der Vorderansicht der Maschine; das Untergestell mit dem Maschinentisch ist nicht dargestellt.

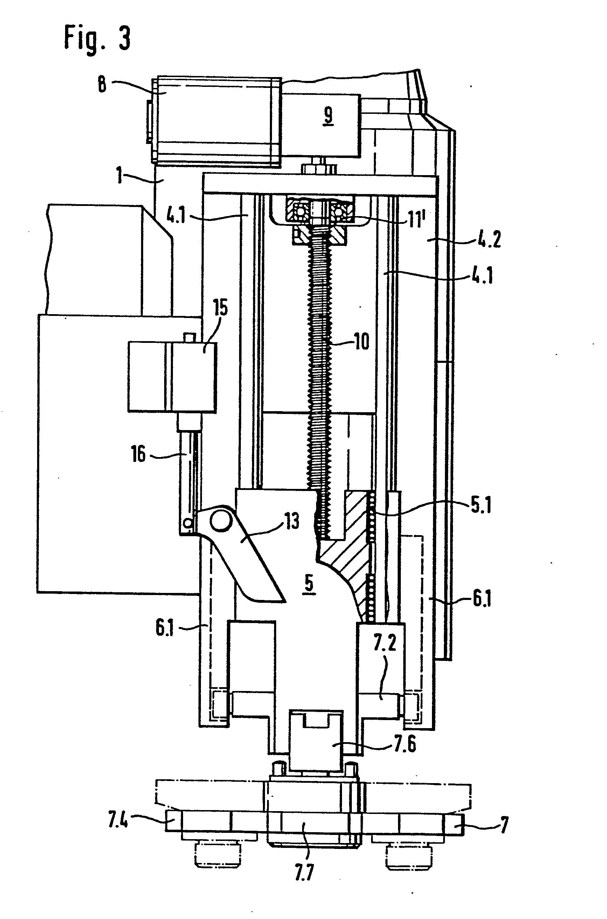

Seitlich des Pinolenkopfes 1 (Fig. 1, 3) ist an dessen Gehäuse bzw. einem Ständer eine Geradführung 4 für einen Support 5 und eine Kurvenführung 6 für ein Trommelmagazin 7 angeordnet.

Die Geradführung 4 besteht aus zwei Stangen 4.1 (Fig. 3) an denen der Support 5 in Kugelbüchsen 5.1 gelagert und vertikal verschiebbar ist. Der Antrieb des Supports 5 für diese Bewegung erfolgt mittels eines Gleichstrom-Getriebemotors 8 über ein Getriebe 9 und eine Spindel 10, die im Rahmen 4.2 der Geradführung 4 in Kugellagern 11 gelagert ist.

Die Kurvenführung 6 für das Trommelmagazin 7 besteht aus zwei am unteren Ende kreisbogenförmigen Schienen 6.1, in denen das Lager 7.1 des Trommelmagazins 7 mit seitlichen, rollenbestückten Lagerzapfen 7.2 läuft. In dem Lager 7.1 sitzt außerdem der Lagerdorn 7.3 auf dem die Magazintrommel 7.4 in Kugellagern 7.5 drehbar gelagert ist. - Die Lagerzapfen 7.2 und der Lagerdorn 7.3 bilden ein Achsenkreuz. Support 5 und Trommelmagazin 7 sind über einen Ausleger 7.6 am Lager 7.1 gekuppelt derart, daß beim Hochziehen des Supports 5 mittels der Spindel 10 das Magazin 7 am Ausleger 7.6 nachgezogen wird, dabei mit seinen Lagerzapfen 7.2 in der Kurvenführung 6 auf einem Bogen nach oben geführt wird und aus der in Fig. 1 gezeigten Wechselposition neben und unterhalb der Pinole 2 in seine (gestrichelt eingezeichnete) Ruheposition seitlich neben dem Pinolenkopf 1, um 90 Grad geschwenkt, gebracht wird.

- 5 -

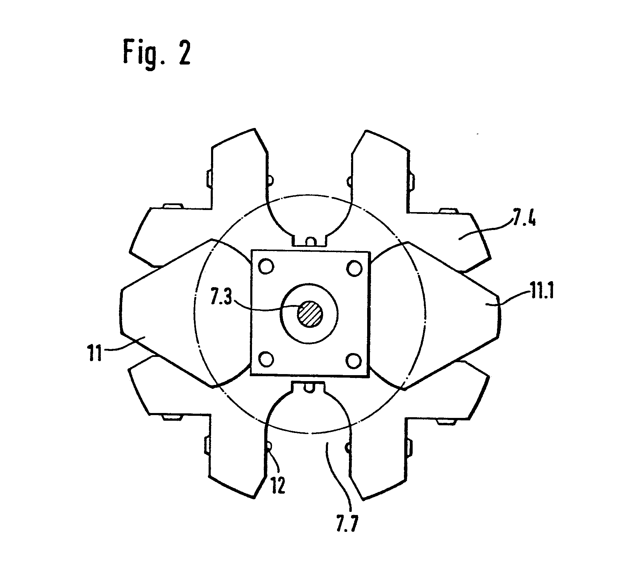

Wie Fig. 2 zeigt, hat die Magazintrommel 7.4 vier fächerförmige, zum Rande offene Magazinplätze 7.7, von denen zwei mit Werkzeughaltern 11 besetzt sind. - Diese Werkzeughalter haben eine Grundplatte 11.1 in Form eines gleichseitigen Dreiecks mit abgerundeten Ecken, auf der ein Futter 11.2 beliebiger Art zur Aufnahme und Einspannung eines Werkzeug- oder Elektrodenschaftes angeordnet ist. Die Werkzeughalter 11 werden durch die Anlage einer Fläche ihrer dreieckförmigen Grundplatte 11.1 an der Wandung des im Querschnitt quadratischen Trommelkernes positioniert (Fig. 2) und gegen ein Herausfallen aus den Magazinplätzen 7.7 durch Rastbolzen 12 gehalten. Man erkennt aus Fig. 1, daß die Werkzeughalter 11 in der Wechselposition der Magazintrommel 7.4 nach oben herausgezogen werden können, während sie in der Ruheposition von der Seite her frei zugänglich sind.

Während ihrer Aufwärtsbewegung aus ihrer Wechsel- in ihre Ruheposition läuft die Magazintrommel 7.4 an einer stationären Schaltklinke 13 vorbei (Fig. 3), die auf einen von vier in der Trommelnabe sitzenden Schaltbolzen 14 trifft (Fig. 1) und die Trommel um 90 Grad entgegen dem Uhrzeigersinn weiterschaltet (Fig. 3). Die Schaltklinke 13 kann mittels eines Gleichstrom-Hubmagneten 15 durch die Stange 16 aus der Bahn eines Schaltbolzens 14 zurückgezogen werden, so daß die Weiterschaltung der Magazintrommel 7.4 unterbleibt. Umgekehrt kann auch durch eine wiederholte Auf- und Abwärtsbewegung des Supports 5 im Bereich der Schaltklinke 13 eine mehrfache Weiterschaltung der Magazintrommel 7.4 bewirkt werden.

- 6 -

Zur Übernahme eines in Übergabeposition befindlichen Werkzeughalters 11 wird die Pinole 2 mit dem Magnetspannfutter auf die Grundplatte 11.1 des Werkzeughalters abgesenkt, so daß dieser magnetisch aufgespannt wird. Die Pinole geht dann wieder hoch und/oder das Trommelmagazin 7 wird in seine Ruheposition hochgefahren (Fig. 1).

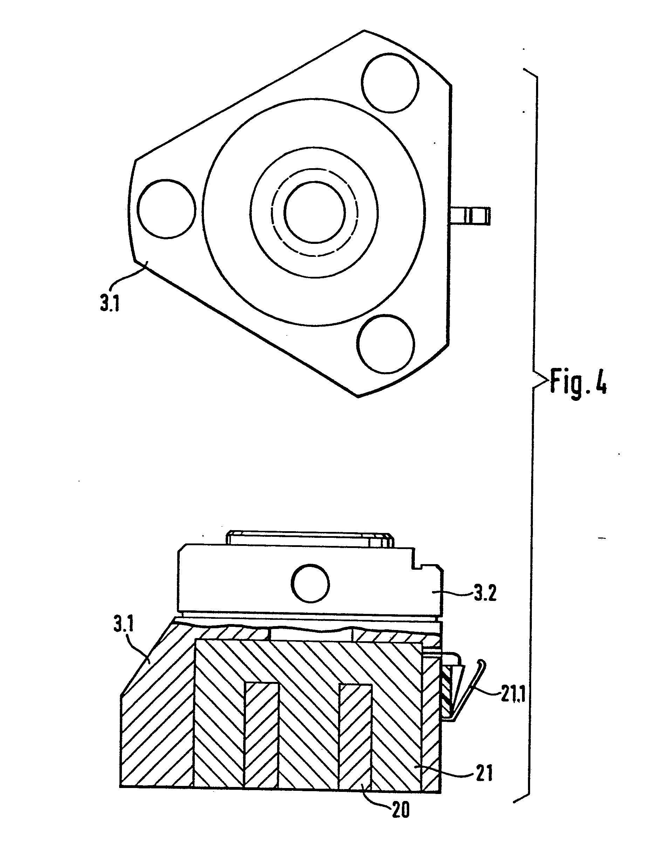

Fig. 4 zeigt die Konstruktion des Magnetspannfutters 3; auf seiner zum Aufspannen auf die Pinole 2 ausgestatteten Grundplatte 3.2 sitzt ein topfförmiges Gehäuse 3.1 vom Umriß und den Abmessungen der Grundplatte 11.1 der Werkzeughalter 11. In dem Gehäuse 3.1 sind ein Dauermagnet 20 und ein Elektromagnet 21 untergebracht. Der Elektromagnet 21 wird über an der Gehäuseaußenseite angeordnete Kontakte 21.1 mit Gleichstrom gespeist. Die beiden Magnete 20 und 21 sind entgegengesetzt gepolt, ihre Kräfte sind annähernd gleich, so daß bei eingeschaltetem Elektromagneten 21 die Tragkraft des Dauermagneten 20 aufgehoben wird. - Der Stromkreis des Elektromagneten 21 führt über die Kontakte 21.1 und Gegenkontakte 21.2 am Lager 7.1 des Trommelmagazins 7 (Fig. 1) und eine Schaltvorrichtung in der (nicht dargestellten) Maschinensteuerung. Die Kontakte 21.1/21.2 sind nur geschlossen bei abgesenkter Pinole 3. Der Stromkreis bleibt offen, wenn das Magnetspannfutter 3 einen Werkzeughalter 11 aus einem Magazinplatz 7.7 aufgenommen hat und beim Zurückgehen der Pinole aus seinem Platz herauszieht. Wird jedoch ein Werkzeughalter 11 in einen leeren Magazinplatz 7.7 eingeschoben, so wird, um ihn dort abzusetzen, der Stromkreis von der Steuerung geschlossen, und die magnetische Spannkraft verschwindet.

Ein Werkzeughalter 11 wird am Magnetspannfutter 3 in bezug auf die Pinolenachse und seine Winkelstellung mit Bezug

- 7 -

auf eine Referenzmarke genau zentriert bzw. justiert. Hierfür sind verschiedene Systeme bekannt, die jedoch nicht Gegenstand der Erfindung und auch die geschilderte Funktion der Einrichtung ohne Einfluß sind.

Man erkennt aus der Beschreibung, daß eine Werkzeugwechseleinrichtung nach der Erfindung in ihrem konstruktiven Aufbau und ihren Funktionen, nämlich Bewegungen und deren Steuerung, außerordentlich einfach und daher kaum reparaturanfällig und praktisch wartungsfrei ist. Der gesamte Wechselvorgang wird von einem Gleichstrommotor 8 angetrieben, zur Weiterschaltung des Trommelmagazins 7 dient eine einfache Schaltklinke 13, die durch einen Hubmagneten 15 EIN/AUS geschaltet wird. Die Anwendung der Erfindung ist auch nicht auf Funkenerosionsmaschinen beschränkt, nur muß bei mechanischer spanabhebender Bearbeitung für eine drehschlüssige Kupplung zwischen Werkzeughalter bzw. -schaft und Magnetspannfutter gesorgt werden, was o. w. möglich ist. Die Ausführung kann auch in Einzelheiten im Rahmen der Erfindung abgewandelt werden, so in der Zahl der Magazinplätze und in der Art des Schaltmechanismus.

**Dipl.-Ing. Günter Schliebs**
**Dr. rer. nat. Horst Zinngrebe**

**0048457**

**Patentanwälte**
**in Darmstadt**

European Patent Attorneys
Mandataires en brevet européens

Schliebs + Zinngrebe, Claudiusweg 17A, D-6100 Darmstadt

An das
Europäische Patentamt
Erhardtstraße 27

8000 München 2

Telefon: (06151) 46753
Telex: 0419499
Telegramm: inventron

Claudiusweg 17A
D-6100 Darmstadt

| Ihr Brief | Ihr Ref. | Unser Ref. H 506 | Datum |
|---|---|---|---|

Betrifft: Europäische Patentanmeldung
Anmelder: Firma Dieter Hansen GmbH, Eppertshausen

Werkzeugwechseleinrichtung für eine Werkzeugmaschine

Patentansprüche

1. Werkzeugwechseleinrichtung für eine Werkzeugmaschine mit in seiner Achsrichtung verfahrbarem Spindelkopf und einem parallel zum Spindelkopf und unter die Spindel verfahrbaren Magazin mit mehreren Magazinplätzen für Werkzeuge, dadurch gekennzeichnet, daß

- parallel zum Spindelkopf (1) ein Support (5) verfahrbar ist,

- mit dem ein dreh- und schwenkbares Trommelmagazin (7) mit mehreren zum Umfang offenen Magazinplätzen (7.7.) für Werkzeuge (11) gekuppelt ist,

- das in einer Schienenführung (6) geführt ist derart, daß es mit seiner Trommelachse in Wechselposition parallel und in Ruheposition senkrecht zur Spindelachse hängt,

- daß die Werkzeuge (11) in den Magazinplätzen (7.7) gegen seitliches Herausfallen gesichert sind,

- daß die Spindel (2) mit einem Magnetspannfutter (3) zum Greifen und Halten eines Werkzeuges (11) ausgerüstet ist

- und daß sich die Spindel (2) bzw. der Spindelkopf (1) beim Werkzeugwechsel relativ zum Magazin (7) bewegt.

2. Werkzeugmaschine nach Anspruch 1, dadurch gekennzeichnet, daß das Magnetspannfutter (3) mit einem Dauermagneten (20) zum Ergreifen und Halten des Werkzeuges (11) und mit einem gegengepolten Elektromagneten (21) zum Lösen und Zurücklegen des Werkezuges ausgerüstet ist und der Stromkreis des Elektromagneten über Kontakte (21.1, 21.2) zum Lager (7.1) des Trommelmagazins (7) geführt ist, wenn die Spindel (2) dicht über einem Magazinplatz (7.7) steht.

3. Werkzeugmaschine nach Anspruch 1, dadurch gekennzeichnet, daß zur Weiterschaltung des Trommelmagazins (7) während seiner Bewegung zwischen seinen beiden Positionen seitlich der Schienenführung (6) eine steuerbare Schaltklinke (13) angeordnet ist.

Fig.1

Fig. 2

Fig. 3

3.1

3.2

3.1

21.1

21

20

Fig.4